# EUROPEAN PATENT SPECIFICATION

(11) **EP 3 742 897 B1**
(45) Date of publication and mention of the grant of the patent: **17.04.2024**
(21) Application number: 19701896.3
(22) Date of filing: 10.01.2019
(51) Int. Cl.: A01K 97/02

(54) **A BAIT DISPENSER FOR DISPENSING BAIT DURING ANGLING**
KÖDERSPENDER ZUR ABGABE VON KÖDERN WÄHREND DES ANGELNS
DISTRIBUTEUR D'APPÂT POUR DISTRIBUER UN APPÂT PENDANT LA PÊCHE À LA LIGNE

(30) Priority: 25.01.2018 GB 201801282
(43) Date of publication of application: 02.12.2020
(73) Proprietor: Korda Developments Limited, Basildon, Essex SS14 0HW (GB)
(72) Inventor: DOVE, Thomas, Brentwood, Essex CM14 5QJ (GB); CLARKE, Damian Keith, Colchester, Essex C07 6DR (GB)
(74) Representative: Burnett, Christopher James
(86) International application number: PCT/GB2019/000007
(87) International publication number: WO 2019/145670

(56) References cited:
- WO-A1-2009/027713
- CN-U- 204 482 785
- GB-A- 2 359 473
- GB-A- 2 472 990
- JP-A- H 099 841
- US-A- 6 138 400

## Description

This invention relates to a bait dispenser for dispensing bait during angling.

Bait dispensers are well known for dispensing bait during angling. Anglers traditionally load the bait dispensers with ground bait and then cast the bait dispensers to an area of water to be fished. One known type of bait dispenser comprises a first body portion for containing the bait, a second body portion for closing the first body portion, hinge means by which the first and the second body portions open and close, fastener means for releasably fastening the first and the second body portions together, and attachment means for attaching the bait dispenser to a fishing line. This known type of bait dispenser has its fastener means at a front end of the bait dispenser, and the bait dispenser is required to strike the water nose first in order to release the fastener means and allow the first and the second body portions to open. An angler may not have the required casting skill in order to ensure that the bait dispenser enters the water nose first and so opens, as opposed to the bait dispenser entering the water on its side and failing to open. Also, the striking of the bait dispenser nose first causes undue disturbance of the water, which may disturb fish.

JP H09 9841 A discloses a bait dispenser comprising a body portion for containing the bait, a nose portion for closing the body portion, hinge means by which the nose portion opens and closes about the body portion, fastener means for releasably fastening the nose portion to the body portion, and attachment means which is for attaching the bait dispenser to a fishing line. The fastener means is an electrically-operated fastener means which is activated by a timer. The timer provides time for the bait dispenser to be cast into water and to sink to a required depth in the water. The timer then activates a water-proof switch to enable the nose portion to open and the bait to be dispensed. The bait dispenser operates in a slow time and depth related manner.

It is an aim of the present invention to provide an improved bait dispenser.

Accordingly, the present invention provides a bait dispenser for dispensing bait during angling, according to independent claim 1, which bait dispenser comprises:
(i) a body portion for containing the bait;
(ii) a nose portion for closing the body portion;
(iii) hinge means by which the nose portion opens and closes about the body portion;
(iv) fastener means for releasably fastening the nose portion to the body portion; and
(v) attachment means which is for attaching the bait dispenser to a fishing line,
and the bait dispenser being such that:
(vi) the body portion is a tubular body portion having a longitudinally extending through bore;
(vii) the nose portion is arranged to close a front end of the body portion;
(viii) the fastener means is an electrically-operated fastener means which operates to allow the nose portion to open about the body portion;
(ix) the fastener means comprises two electrodes arranged inside the nose portion and extending into respective apertures of the nose portion; and
(x) the nose portion is arranged to open about the body portion consequent upon the electrodes being contacted by water into which the bait dispenser is cast and the water completing an electrical circuit between the electrodes.

The bait dispenser of the present invention is advantageous in that the fastener means is electrically-operated. Thus the bait dispenser of the present invention does not have to be cast such that it strikes the water nose first in order to release the fastener means. This thus avoids the angler having to have the required casting skill, and it also avoids the unwanted water disturbance. Still further, because the body portion is a tubular body portion having a longitudinal extending through bore, the bait dispenser is able to be retrieved such that it has at least a reduced tendency to wiggle in the water as it is being retrieved, as compared with the above mentioned known type of bait dispenser. This again leads to less water disturbance. Still further, water is caused to pass through the hollow body portion as the bait dispenser is being retrieved, and this water washes through the body portion and thus washes out any residual bait in the body portion.

The bait dispenser may be one in which the fastener means comprises a solenoid and a locking pin, and in which the locking pin is on the solenoid and is movable by the solenoid between a locking position in which the nose portion is locked to the body portion, and an open position in which the nose portion opens about the body portion. Other types of electrically-operated fastener means may be employed.

The bait dispenser may be one in which the hinge means comprises a spring for causing the nose portion to open about the body portion. The spring means is preferably a coil spring but other types of springs may be employed.

The bait dispenser may be one in which the nose portion has a base which closes the body portion and prevents bait in the body portion from entering the nose portion. Electronic components for the fastener means may be mounted on the base such that the electronic components are located in the nose portion. Thus the electronic components are isolated from the bait in the body portion.

The fastener means may include delay means for delaying operation of the fastener means to open the nose portion about the body portion. The delay means may be advantageous in facilitating the deployment of the bait dispenser at an exact area intended by an angler. For example, if an angler should cast the bait dispenser and the cast should be too long, then the operation of the delay means will give the angler time to pull the bait dispenser back in order to get the bait dispenser in the required area. The delay means may be provided with a pre-set delay, or it may be provided with an adjustable delay which may be set by the angler. In alternative embodiments of the invention, the fastener means may be such that it does not include a delay means, and the fastener means can then be arranged to operate as soon as the electrodes are contacted by the water into which the bait dispenser is cast.

The bait dispenser may be one in which the attachment means is at a rear end of the body portion. The attachment may be at other positions if desired.

The body portion may include fins for facilitating the flight of the bait dispenser during the casting. With fins and a substantially tubular body portion of circular cross-section, the entire bait dispenser is able to have a rocket-like appearance. Preferably there are four of the fins. More or less than four of the fins may be employed.

The bait dispenser may include buoyancy means for ensuring that the bait dispenser does not sink if the fishing line snaps during casting, and also for facilitating the dispersion of the bait. The buoyancy means may ensure that the bait dispenser stays evenly balanced in the water and thereby promotes even distribution of the bait. The buoyancy means may be positioned where suitable in the bait dispenser, for example over a central part of the body portion, in order to ensure stable buoyancy.

The bait dispenser may include weighting means for providing increased casting distance. The increased casting distance is as compared with the casting distance if the weighting means were not employed. The weighting means will normally be located in the front of the bait dispenser. The weighting means may be made of any suitable and appropriate weighting material.

Embodiments of the invention will now be described solely by way of example and with reference to the accompanying drawings in which:
Figure 1 is a perspective view from the front and one side of a bait dispenser for dispensing bait during angling, the bait dispenser being in accordance with the present invention and having a nose portion for closing a body portion, the nose portion being shown in an open position in order to show hinge means and fastener means forming part of the bait dispenser;
Figure 2 is a view like Figure 1 but shows the nose portion in a closed position on the body portion;
Figure 3 is a perspective view like Figure 1 but from the front and the other side, and shows attachment means at a rear end of the body portion;
Figure 4 is a view like Figure 2 but with the nose portion being partially cut away in order to illustrate internal components in the nose portion;
Figure 5 is a longitudinal section through the bait dispenser shown in Figure 1;
Figure 6 is an enlarged longitudinal section of part of the bait dispenser;
Figure 7 is a front end view of the bait dispenser as shown in Figure 1;
Figure 8 is a rear end view of the bait dispenser as shown in Figure 1;
Figure 9 is an enlarged detail of a front part of the bait dispenser and illustrates the positioning of electrodes forming part of the bait dispenser;
Figure 10 is an enlarged detail of a front part of the bait dispenser and in an orientation that illustrates hinge means forming part of the bait dispenser;
Figure 11 shows the bait dispenser with the front part as in the orientation shown in Figure 10; and
Figure 12 is a perspective view from the front and one side of a bait dispenser for dispensing bait during angling, the bait dispenser being not in accordance with the present invention.

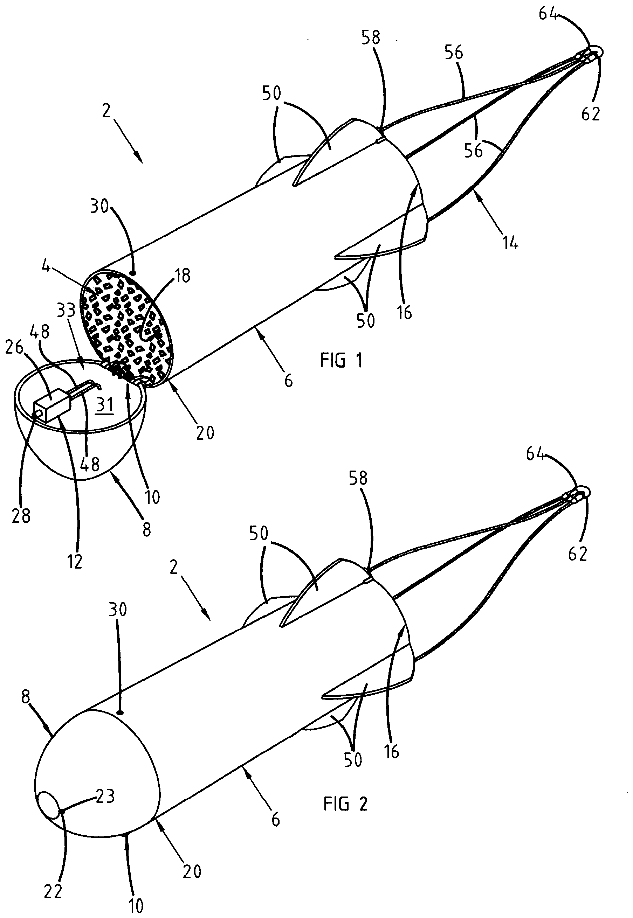

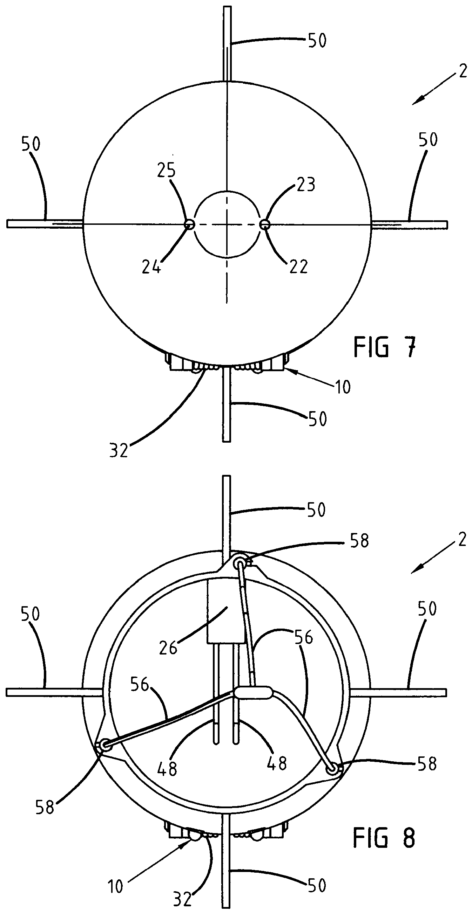

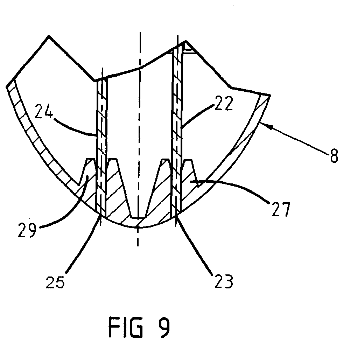

Referring to Figures 1 - 11, there is shown a bait dispenser 2 for dispensing bait 4 during angling. The bait dispenser 2 comprises a body portion 6 for containing the bait 4. The bait dispenser 2 also comprises a nose portion 8 for closing the body portion 6. Hinge means 10 enables the nose portion 8 to open and close about the body portion 6. The bait dispenser 2 has fastener means 12 for releasably fastening the nose portion 8 to the body portion 6. Attachment means 14 is provided for attaching the bait dispenser 2 to a fishing line (not shown). The attachment means 14 is provided at a rear end 16 of the body portion 6.

The bait dispenser 2 is such that the body portion 6 is a tubular body portion having a longitudinally extending through bore 18. As can be seen from a comparison of Figures 1 and 2, the nose portion 8 closes a front end 20 of the body portion 6.

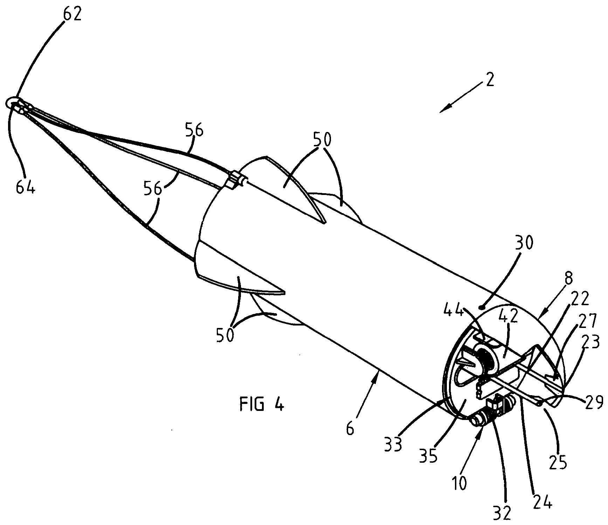

The fastener means 12 is an electrically-operated fastener means 12. The fastener means 12 operates to allow the nose portion 8 to open about the body portion 6 consequent upon electrodes 22, 24 of the fastener means 12 being contacted by water into which the bait dispenser 2 is cast. The electrodes 22, 24 are inside the nose portion 8 and they extend as shown in Figures 4, 9, 10 and 11 into apertures 23, 25 respectively in the nose portion 8. Formations 27, 29 contain the apertures 23, 25 respectively. In Figure 4 part of the formation 27 is cut away in order to show more of the electrode 22.

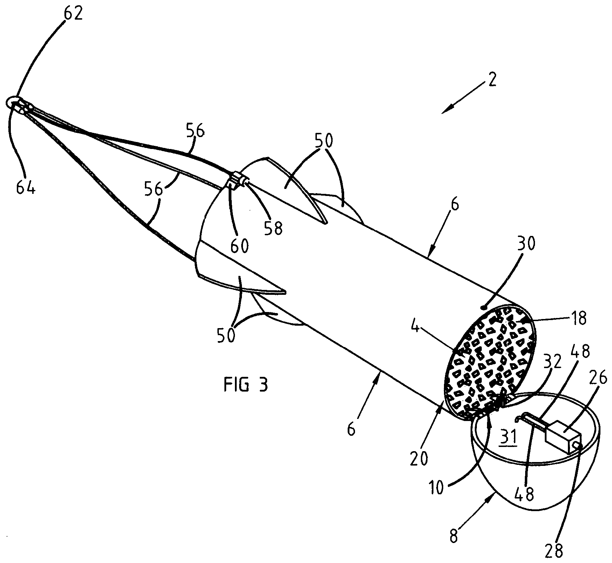

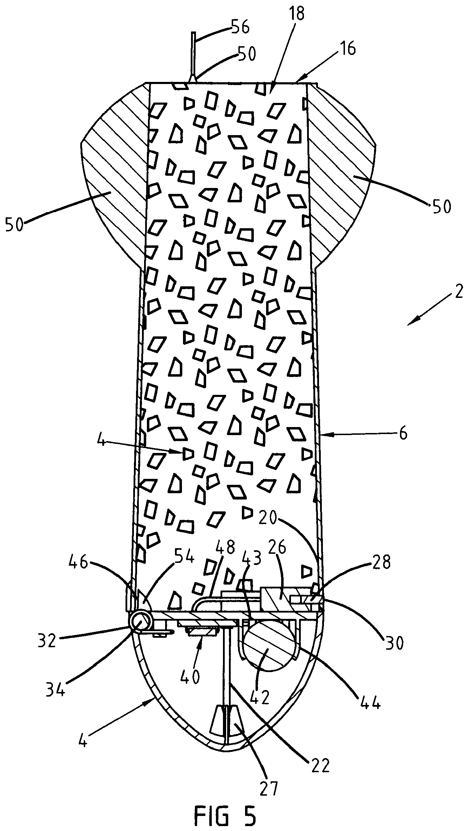

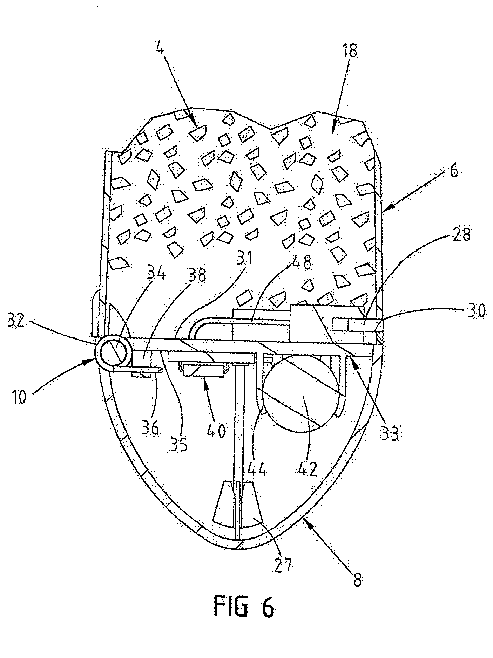

The fastener means 12 comprises a solenoid 26 and a locking pin 28. The locking pin 28 is on the solenoid 26. The locking pin 28 is movable by the solenoid 26 between a locking position shown in Figures 2 and 4 - 6 in which the nose portion 8 is locked to the body portion 6, and an open position as shown in Figures 1 and 3 in which the nose portion 8 opens by pivoting about the body portion 6. As can be seen from Figures 5 and 6, in the locked position, the locking pin 28 locates in an aperture 30 in the front end 20 of the body portion 6. As can be seen from Figures 1, 3, 5 and 6, the solenoid 26 and the locking pin 28 are located on one side 31 of a base 33 of the nose portion 8.

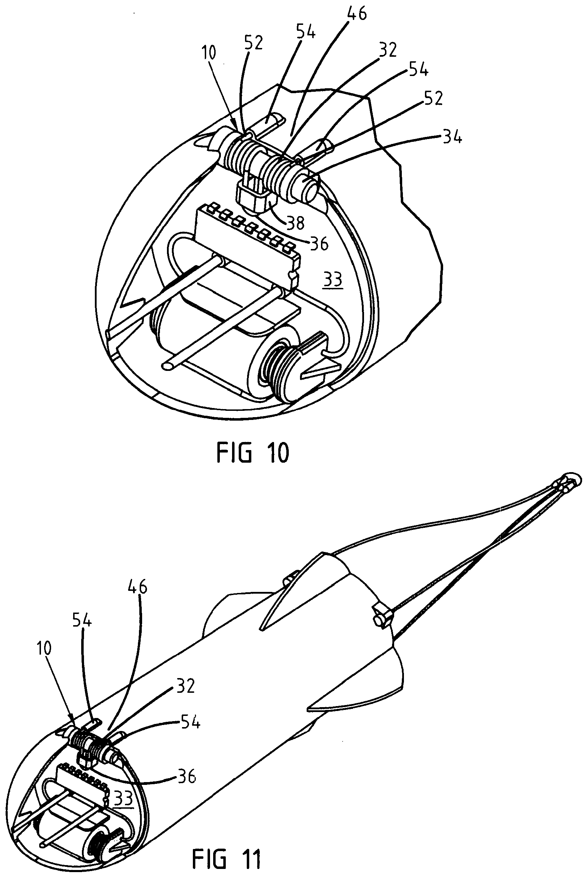

When the solenoid 26 withdraws the locking pin 28 from the aperture 30, the hinge means 10 is able to operate to move the nose portion 8 to its open position. More specifically, the hinge means 10 comprises a coil spring 32 which is positioned on a pivot 34. A central part 36 of the coil spring 32 is anchored to an anchor member 38. The anchor member 38 extends away from a side of the base 33. Figures 5 and 10 show how the coil spring 32 is such that its ends 52 are secured in anchor members 54 to a part 46 of the body portion 6. This enables the coil spring 32 to permanently bias the nose portion 8 to its open position.

The fastener means 12 includes an electronic circuit 40 and a battery 42. The electronic circuit 40 is connected to the battery 42 by a connector 43. The battery 42 is received as a push fit in a holder 44. The various electronic components 22, 24, 26, 40, 42 are mounted as shown in Figures 5 and 6 on the side 35 of the base 33 of the nose portion 8. The solenoid 26 and two wires 48 leading from the solenoid 26 to the electronic circuit 40 are mounted on side 31 of the base 33. The base 46 closes the body portion 6 and thus prevents bait 4 in the bore 18 from getting into the nose portion 8.

The body portion 6 is provided with four fins 50. The fins 50 facilitate the flight of the bait dispenser 2 during the casting. The fins 50 are located near the rear end 16 of the body portion 6.

The bait dispenser 2 is such that the body portion 6 is of a circular cross-section. The body portion 6, the nose portion 8 and the fins 50 cause the bait dispenser 2 to have a rocket-like appearance. The bait dispenser 2 is thus aerodynamic for casting. The nose portion 8 opens automatically under the biasing from the coil spring 32 once the cast bait dispenser 2 has struck the water, and the water has contacted the electrodes 22, 24 to thereby cause the solenoid 26 to operate and remove the locking pin 28 from the aperture 30 in the body portion 6. The solenoid 26 is such that the locking pin 28 is normally biased to the locking position. Thus power is only required in order to cause the solenoid 26 to operate and retract the locking pin 28 for opening purposes. The longitudinal bore 18 through the body portion 6 enables the bait 4 easily to be placed in the body portion 6 through the rear end 16 of the bore 18. The bait dispenser 2 is easily connected to a fishing line via the fastener means 12. The fastener means 12 comprises three connector strips 56. The connector strips 56 are provided at one end with connectors 58 for each being received in complementary recesses in a holder 60 on the outside of the body portion 6. The connector strips 56 are connected at their other ends by a connector 62 having an aperture 64. The aperture 64 enables a fishing line (not shown) to be tied to the connector 62. The attachment means 14 thus comprises the connector strips 56, the connectors 58, the holders 60 and the connector 62. Alternatively, the attachment means 14 may be simply regarded as the holder 60 on the body portion 6. Alternatively, the attachment means 14 may be other holder formations for receiving some other kind of attachment to the fishing line.

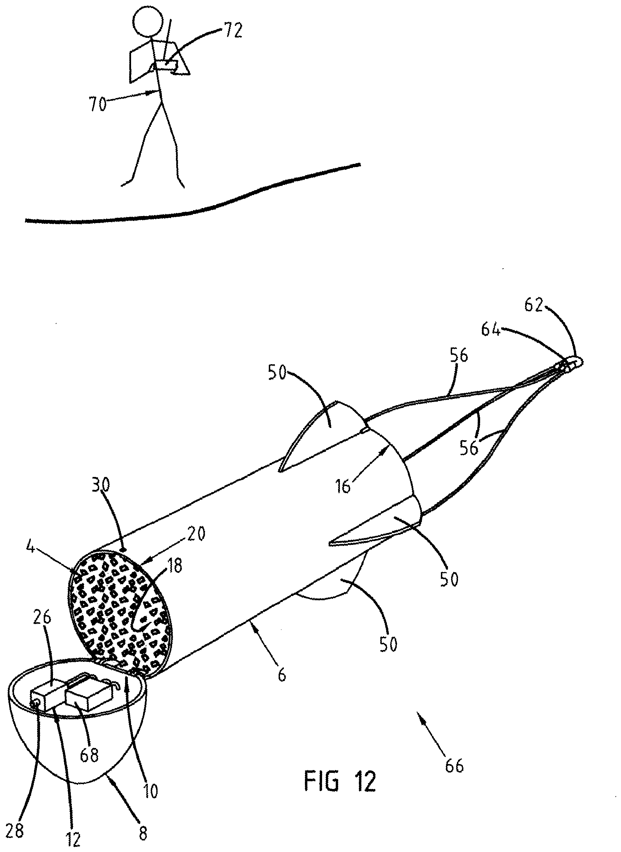

Referring now to Figure 12, there is shown a bait dispenser 66 for dispensing bait 4 during angling, which is not in accordance with the present invention. Similar parts as in the bait dispenser 2 have been given the same reference numerals for ease of comparison and understanding.

The bait dispenser 66 is such that the fastener means 12 is additionally provided with a receiver 68. The receiver 68 is operated remotely by an angler 70 using a transmitter 72. When the angler 70 sends a control signal via the transmitter 72 to the receiver 68, the receiver 68 causes operation of the solenoid 26 and the locking pin 28. Thus the fastener means 12 as shown in Figure 12 is a remotely operated fastener means 12.

It is to be appreciated that the embodiments of the invention described above with reference to the accompanying drawings have been given by way of example only and that modifications may be effected. Thus, for example, the fastener means 12 may be such that the electronic circuit 14 includes delay means for delaying operation of the fastener means 12 to open the nose portion about the body portion. The delay means may be arranged to operate to give an angler a time delay which is sufficient for fine positioning of the cast bait dispenser 2 in the area of water intended to be fished. The bait dispenser 2 may alternatively or additionally include weighting means for providing an increased casting distance. The shape of the body portion and the nose portion 8 may be other than those shown. Other types of hinge means 10 and fastener means 12 may be employed. Individual components shown in the drawings are not limited to use in their drawings and they may be used in other drawings within the scope of the invention defined by the appended claims.

## Claims

1. A bait dispenser (2) for dispensing bait (4) during angling, which bait dispenser (2) comprises:
(i) a body portion (6) for containing the bait (4);
(ii) a nose portion (8) for closing the body portion (6);
(iii) hinge means (10) by which the nose portion (8) opens and closes about the body portion (6);
(iv) fastener means (12) for releasably fastening the nose portion (8) to the body portion (6); and
(v) attachment means (14) which is for attaching the bait dispenser (2) to a fishing line,
and the bait dispenser (2) being such that:
(vi) the body portion (6) is a tubular body portion (6) having a longitudinally extending through bore (18);
(vii) the nose portion (8) is arranged to close a front end (20) of the body portion (6);
(viii) the fastener means (12) is an electrically-operated fastener means (12) which operates to allow the nose portion (8) to open about the body portion (6);
(ix) the fastener means (12) comprises two electrodes (22, 24) arranged inside the nose portion (8) and extending into respective apertures (23, 25) of the nose portion (8); and
(x) the nose portion (8) is arranged to open about the body portion (6) consequent upon the electrodes (22, 24) being contacted by water into which the bait dispenser (2) is cast and the water completing an electrical circuit between the electrodes (22, 24).

2. A bait dispenser (2) according to claim 1 in which the fastener means (12) comprises a solenoid (26) and a locking pin (28), and in which the locking pin (28) is on the solenoid (26) and is movable by the solenoid (26) between a locking position in which the nose portion (8) is locked to the body portion (6), and an open position in which the nose portion (8) opens about the body portion (6).

3. A bait dispenser (2) according to claim 1 or claim 2 in which the hinge means (10) comprises a spring (32) for causing the nose portion (8) to open about the body portion (6).

4. A bait dispenser (2) according to claim 3 in which the spring (32) is a coil spring (32).

5. A bait dispenser (2) according to any one of the preceding claims in which the nose portion (8) has a base (33) which closes the body portion (6) and prevents the bait in the body portion (6) from entering the nose portion (8).

6. A bait dispenser (2) according to claim 5 in which electronic components (22, 24, 26, 40, 42) for the fastener means (12) are mounted on the base (33) such that the electronic components (22, 24, 26, 40, 42) are located in the nose portion (8).

7. A bait dispenser (2) according to any one of the preceding claims in which the fastener means (12) includes delay means for delaying operation of the fastener means (12) to open the nose portion (8) about the body portion (6).

8. A bait dispenser (2) according to any one of the preceding claims in which the attachment means (14) is at a rear end of the body portion (6).

9. A bait dispenser (2) according to any one of the preceding claims in which the body portion (6) includes fins (50) for facilitating the flight of the bait dispenser (2) during the casting.

10. A bait dispenser (2) according to any one of the preceding claims and including buoyancy means for ensuring that the bait dispenser (2) does not sink if the fishing line snaps during the casting, and also for facilitating the dispersion of the bait.

11. A bait dispenser (2) according to any one of the preceding claims and including weighting means for providing increased casting distance.

## Patentansprüche

1. Köderspender (2) zum Ausgeben von Ködern (4) beim Angeln, wobei der Köderspender (2) Folgendes umfasst:
(i) einen Körperabschnitt (6) zum Enthalten des Köders (4);
(ii) einen Nasenabschnitt (8) zum Verschließen des Körperabschnitts (6);
(iii) Scharniermittel (10), durch die sich der Nasenabschnitt (8) um den Körperabschnitt (6) herum öffnet und schließt;
(iv) Befestigungsmittel (12) zum lösbaren Befestigen des Nasenabschnitts (8) an dem Körperabschnitt (6); und
(v) Befestigungsmittel (14), die zum Befestigen des Köderspenders (2) an einer Angelschnur dienen,
und wobei der Köderspender (2) so beschaffen ist, dass:
(vi) der Körperabschnitt (6) ein rohrförmiger Körperabschnitt (6) ist, der eine sich in Längsrichtung erstreckende Durchgangsbohrung (18) aufweist;
(vii) der Nasenabschnitt (8) so angeordnet ist, dass er ein vorderes Ende (20) des Körperabschnitts (6) verschließt;
(viii) das Befestigungsmittel (12) ein elektrisch betriebenes Befestigungsmittel (12) ist, das arbeitet, um es dem Nasenabschnitt (8) zu ermöglichen, sich um den Körperabschnitt (6) herum zu öffnen;
(ix) das Befestigungsmittel (12) zwei Elektroden (22, 24) umfasst, die innerhalb des Nasenabschnitts (8) angeordnet sind und sich in entsprechende Öffnungen (23, 25) des Nasenabschnitts (8) erstrecken; und
(x) der Nasenabschnitt (8) so angeordnet ist, dass er sich um den Körperabschnitt (6) herum öffnet, nachdem die Elektroden (22, 24) mit Wasser in Berührung gekommen sind, in das der Köderspender (2) geworfen wurde, und das Wasser einen Stromkreis zwischen den Elektroden (22, 24) geschlossen hat.

2. Köderspender (2) nach Anspruch 1, bei dem das Befestigungsmittel (12) einen Elektromagneten (26) und einen Verriegelungsstift (28) umfasst, und bei dem sich der Verriegelungsstift (28) auf dem Elektromagneten (26) befindet und durch den Elektromagneten (26) zwischen einer verriegelten Stellung, in der der Nasenabschnitt (8) am Körperabschnitt (6) verriegelt ist, und einer offenen Stellung, in der sich der Nasenabschnitt (8) um den Körperabschnitt (6) herum öffnet, bewegbar ist.

3. Köderspender (2) nach Anspruch 1 oder Anspruch 2, bei dem das Scharniermittel (10) eine Feder (32) umfasst, um zu bewirken, dass sich der Nasenabschnitt (8) um den Körperabschnitt (6) herum öffnet.

4. Köderspender (2) nach Anspruch 3, bei dem die Feder (32) eine Spiralfeder (32) ist.

5. Köderspender (2) nach einem der vorstehenden Ansprüche, bei dem der Nasenabschnitt (8) eine Basis (33) aufweist, die den Körperabschnitt (6) verschließt und verhindert, dass der Köder in dem Körperabschnitt (6) in den Nasenabschnitt (8) eindringt.

6. Köderspender (2) nach Anspruch 5, bei dem elektronische Komponenten (22, 24, 26, 40, 42) für die Befestigungsmittel (12) auf der Basis (33) montiert sind, so dass die elektronischen Komponenten (22, 24, 26, 40, 42) sich im Nasenabschnitt (8) befinden.

7. Köderspender (2) nach einem der vorstehenden Ansprüche, bei dem die Befestigungsmittel (12) Verzögerungsmittel einschließen, um Betätigung der Befestigungsmittel (12) zum Öffnen des Nasenabschnitts (8) um den Körperabschnitt (6) zu verzögern.

8. Köderspender (2) nach einem der vorstehenden Ansprüche, bei dem sich das Befestigungsmittel (14) an einem hinteren Ende des Körperabschnitts (6) befindet.

9. Köderspender (2) nach einem der vorstehenden Ansprüche, bei dem der Körperabschnitt (6) Flossen (50) einschließt, um den Flug des Köderspenders (2) während des Wurfs zu erleichtern.

10. Köderspender (2) nach einem der vorstehenden Ansprüche, und der Schwimmmittel einschließt, um sicherzustellen, dass der Köderspender (2) nicht sinkt, wenn die Angelschnur während des Werfens reißt, und um auch die Verteilung des Köders zu erleichtern.

11. Köderspender (2) nach einem der vorstehenden Ansprüche, und der Gewichtungsmittel einschließt, um eine größere Wurfweite bereitzustellen.

## Revendications

1. Distributeur d'appât (2) pour distribuer un appât (4) pendant la pêche à la ligne, lequel distributeur d'appât (2) comprend :
(i) une partie corps (6) pour contenir l'appât (4) ;
(ii) une partie nez (8) pour fermer la partie corps (6) ;
(iii) un moyen d'articulation (10) par l'intermédiaire duquel la partie nez (8) s'ouvre et se ferme autour de la partie corps (6) ;
(iv) un moyens de fixation (12) pour fixer de manière amovible la partie nez (8) à la partie corps (6) ; et
(v) un moyen d'attache (14) qui est destiné à attacher le distributeur d'appât (2) à une ligne de pêche,
et le distributeur d'appât (2) étant tel que :
(vi) la partie corps (6) est une partie corps tubulaire (6) présentant un alésage traversant (18) s'étendant longitudinalement ;
(vii) la partie nez (8) est agencée pour fermer une extrémité avant (20) de la partie corps (6) ;
(viii) le moyen de fixation (12) est un moyen de fixation à commande électrique (12) qui fonctionne pour permettre à la partie nez (8) de s'ouvrir autour de la partie corps (6) ;
(ix) le moyen de fixation (12) comprend deux électrodes (22, 24) agencées à l'intérieur de la partie nez (8) et s'étendant dans des orifices respectifs (23, 25) de la partie nez (8) ; et
(x) la partie nez (8) est agencée pour s'ouvrir autour de la partie corps (6) suite à une mise en contact des électrodes (22, 24) avec de l'eau dans laquelle le distributeur d'appât (2) est lancé, et l'eau complétant un circuit électrique entre les électrodes (22, 24).

2. Distributeur d'appât (2) selon la revendication 1, dans lequel le moyen de fixation (12) comprend un solénoïde (26) et une goupille de verrouillage (28) et dans lequel la goupille de verrouillage (28) est sur le solénoïde (26) et peut être déplacée par le solénoïde (26) entre une position de verrouillage dans laquelle la partie nez (8) est verrouillée sur la partie de corps (6), et une position ouverte dans laquelle la partie nez (8) s'ouvre autour de la partie corps (6).

3. Distributeur d'appât (2) selon la revendication 1 ou la revendication 2, dans lequel le moyen d'articulation (10) comprend un ressort (32) pour amener la partie nez (8) à s'ouvrir autour de la partie corps (6).

4. Distributeur d'appât (2) selon la revendication 3, dans lequel le ressort (32) est un ressort hélicoïdal (32).

5. Distributeur d'appât (2) selon l'une quelconque des revendications précédentes, dans lequel la partie nez (8) présente une base (33) qui ferme la partie corps (6) et empêche l'appât dans la partie corps (6) d'entrer dans le partie nez (8).

6. Distributeur d'appât (2) selon la revendication 5, dans lequel des composants électroniques (22, 24, 26, 40, 42) pour le moyen de fixation (12) sont montés sur la base (33) de telle sorte que les composants électroniques (22, 24, 26, 40, 42) soient situés dans la partie nez (8).

7. Distributeur d'appât (2) selon l'une quelconque des revendications précédentes, dans lequel le moyen de fixation (12) inclut des moyens de retard pour retarder le fonctionnement du moyen de fixation (12) pour ouvrir la partie nez (8) autour de la partie corps (6).

8. Distributeur d'appât (2) selon l'une quelconque des revendications précédentes, dans lequel le moyen d'attache (14) se trouve au niveau d'une extrémité arrière de la partie corps (6).

9. Distributeur d'appât (2) selon l'une quelconque des revendications précédentes, dans lequel la partie corps (6) inclut des ailettes (50) pour faciliter le vol du distributeur d'appât (2) pendant le lancer.

10. Distributeur d'appât (2) selon l'une quelconque des revendications précédentes, et incluant des moyens de flottabilité pour garantir que le distributeur d'appât (2) ne coule pas si la ligne de pêche se brise pendant le lancer, et également pour faciliter la dispersion de l'appât.

11. Distributeur d'appât (2) selon l'une quelconque des revendications précédentes, et incluant des moyens de lestage pour fournir une distance de lancer accrue.
